# FASCICULE DE BREVET EUROPEEN

(11) **EP 3 764 148 B1**
(45) Date de publication et mention de la délivrance du brevet: **12.02.2025**
(21) Numéro de dépôt: 20184027.9
(22) Date de dépôt: 03.07.2020
(51) Int. Cl.: G02B 26/10

(54) **SCANNER À RÉSEAU OPTIQUE À COMMANDE DE PHASE MOBILE**
SCANNER MIT OPTISCHER NETZEINHEIT MIT MOBILER PHASENSTEUERUNG
OPTICAL NETWORK SCANNER WITH MOBILE PHASE CONTROL

(30) Priorité: 08.07.2019 FR 1907589
(43) Date de publication de la demande: 13.01.2021
(73) Titulaire: Commissariat à l'Energie Atomique et aux Energies Alternatives, 75015 Paris (FR)
(72) Inventeur: FANGET, Stéphane, 38054 GRENOBLE CEDEX 09 (FR); CASSET, Fabrice, 38054 GRENOBLE CEDEX 09 (FR); MOLLARD, Laurent, 38054 GRENOBLE CEDEX 09 (FR)
(74) Mandataire: Brevalex

(56) Documents cités:
- WO-A1-2018/222727
- JP-A- H1 090 625
- XIN TU ET AL: "State of the Art and Perspectives on Silicon Photonic Switches", MICROMACHINES, vol. 10, no. 1, 13 January 2019 (2019-01-13), CH, pages 51, XP055622728, ISSN: 2072-666X, DOI: 10.3390/mi10010051

## Description

### DOMAINE TECHNIQUE

L'invention concerne un scanner ou un micro-scanner, c'est-à-dire un dispositif permettant d'émettre une onde optique, ou onde lumineuse, balayant une surface ou un volume, ainsi qu'un procédé de réalisation d'un tel scanner ou micro-scanner. L'invention peut être utilisée pour l'un des domaines suivants :
- Scanner optique 2D (deux dimensions) ou 3D (trois dimensions) ;
- Imagerie 3D, par exemple pour balayer une scène qui est ensuite reconstituée en 3D avec un imageur ;
- Projection d'images, par exemple au sein d'un pico-projecteur (projecteur miniaturisé) ou pour réaliser une projection intra-rétinienne ;
- Endoscopie ;
- LIDAR, par exemple utilisée dans un véhicule autonome ou autre.

### ÉTAT DE LA TECHNIQUE ANTÉRIEURE

Un micro-scanner optique 2D est un dispositif permettant de scanner une scène avec un faisceau optique, ou faisceau lumineux, balayant l'espace selon deux dimensions, c'est-à-dire balayant une surface.

Un tel micro-scanner optique 2D est par exemple réalisé avec un ou plusieurs micro-miroirs.

Une première architecture de micro-scanner 2D à micro-miroirs consiste à utiliser deux micro-miroirs. Chacun des deux micro-miroirs permet d'orienter un faisceau optique incident parallèlement à une direction de balayage, les deux directions de balayage des deux micro-miroirs étant perpendiculaires l'une par rapport à l'autre. Un premier des deux micro-miroirs reçoit le faisceau issu d'une source optique et le reflète en direction d'un second des deux micro-miroirs. Le premier micro-miroir est mis en mouvement pour que le faisceau optique reflété par le premier micro-miroir balaie optiquement la surface réfléchissante du second micro-miroir et de façon à ce que le faisceau optique reflété par le second micro-miroir, également mis en mouvement, puisse balayer une scène selon le plan défini par les deux directions de balayage. Un tel micro-scanner n'est toutefois pas compact et est difficile à fabriquer en raison de l'alignement nécessaire des deux micro-miroirs l'un par rapport à l'autre pour gérer la réflexion du faisceau incident sur les miroirs. En outre, les dimensions du second micro-miroir doivent être importantes. Des problèmes d'échauffement peuvent également se poser dans un tel micro-scanner.

Une deuxième architecture d'un micro-scanner 2D à micro-miroir consiste à faire appel à un seul miroir mobile autour de deux axes perpendiculaires l'un par rapport à l'autre, ce qui permet de refléter un faisceau optique incident en lui faisant effectuer un balayage suivant deux directions perpendiculaires. Un tel micro-scanner pose toutefois des problèmes de diaphonie (ou « crosstalk » en anglais) mécanique causés par les imperfections des bras de découplage de l'actionneur servant à mettre en mouvement le micro-miroir. L'actionnement suivant un axe engendre généralement un mouvement parasite suivant l'autre axe car les deux axes ne sont jamais parfaitement découplés.

Il est également possible de réaliser un micro-scanner optique 2D avec un OPA (« Optical Phased Array » en anglais, également appelé émetteur optique à commande de phase ou réseau optique à commande de phase. Un tel micro-scanner comporte plusieurs sources de faisceaux optiques souvent issus d'une même source initiale émettant un faisceau optique principal divisé en plusieurs sous-faisceaux par exemple au moyen de guides d'onde. Les sous-faisceaux sont ensuite déphasés les uns par rapport aux autres de façon à produire, lors de leur émission, une onde optique dont l'angle d'émission, par rapport à la surface depuis laquelle l'onde optique est émise, peut être ajusté en jouant sur la valeur du déphasage entre chaque sous-faisceau. Ce principe de fonctionnement peut être extrapolé à une matrice 2D de sources optiques permettant un balayage d'un faisceau optique suivant deux directions perpendiculaires l'une par rapport à l'autre.

Un OPA peut être réalisé à partir de sources optiques fonctionnant en transmission, comme par exemple des sorties de guides optiques, ou des sources optiques fonctionnant en réflexion, avec dans ce cas un contrôle de la phase de chaque source qui est assuré par la position d'un micro-miroir faisant partie d'une matrice de micro-miroirs.

Pour de nombreuses applications, les micro-scanners optiques 2D nécessitent de balayer l'espace avec un premier axe dit « lent » et un deuxième axe dit « rapide », et cela avec des angles de scan, ou angle de balayage, pouvant dépasser les 100° dans les deux directions. Par exemple, la fréquence visée pour une application de projection est de 60 Hz pour l'axe lent (qui correspond à la fréquence de rafraîchissement vidéo) et de 40 kHz pour l'axe rapide pour obtenir une résolution HD 1080. Pour une application LIDAR, les fréquences liées aux axes lent et rapide sont définies par le nombre de points par trame qui est fonction de la taille de l'objet à détecter sur une distance donnée (par exemple, la fréquence liée à l'axe lent est égale à 10 Hz et celle liée à l'axe rapide est égale à 1 kHz).

Les actionneurs MEMS utilisés pour le déplacement des micro-miroirs permettent d'atteindre des angles de scan optique de l'ordre de 100° mais pour cela, ils doivent généralement fonctionner à la fréquence de résonance mécanique afin de maximiser l'amplitude des déplacements des micro-miroirs. Or, les fréquences de résonance mécanique des actionneurs MEMS sont rarement inférieures à 1 kHz et souvent au moins égales à au moins 10 kHz en raison de la raideur du matériau (par exemple du silicium) utilisé et de leurs faibles dimensions. Les déplacements selon l'axe lent sont donc difficilement réalisables.

Le document WO 2018/222727 A1 décrit un scanner optique comprenant une source optique couplée à au moins une fibre optique.

### EXPOSÉ DE L'INVENTION

Un but de la présente invention est de proposer un scanner ou micro-scanner ne présentant pas les inconvénients des dispositifs de l'art antérieur exposés ci-dessus, et qui soit adapté pour réaliser un balayage selon une, deux ou trois dimensions, avec un angle d'émission de valeur importante pour chaque dimension.

Pour cela, la présente invention propose un scanner selon la revendication 1.

Ce scanner combine judicieusement un réseau optique à commande de phase avec une partie mobile déplacée par un actionneur pour que le faisceau optique émis depuis les déphaseurs optiques puisse réaliser un balayage selon une, deux voire trois dimensions. Un tel scanner permet donc de combiner le balayage obtenu en mettant en mouvement la première partie mobile du support et celui obtenu via le déphasage réalisé par le réseau optique à commande de phase.

Un tel scanner est plus compact et plus facile à fabriquer qu'un scanner nécessitant d'aligner deux micro-miroirs. Le scanner proposé ne pose pas de problème de diaphonie, contrairement aux scanners utilisant un seul micro-miroir devant être déplacé selon deux axes. En outre, la réalisation de ce scanner ne nécessite pas de gérer la planéité des miroirs ni le dépôt de matériau réflecteur sur les miroirs.

Ce scanner ne pose pas non plus de problème par rapport aux déplacements selon un axe lent du fait que ces déplacements du faisceau optique peuvent être assurés par le réseau optique à commande de phase si le balayage doit se faire selon un axe rapide et un axe lent.

Le scanner correspond avantageusement à un micro-scanner, c'est-à-dire un scanner comprenant des éléments de dimensions micrométriques ou nanométriques. Ce micro-scanner peut correspondre à un composant de type MEMS ou NEMS.

L'actionneur peut être de type MEMS ou NEMS.

L'actionneur peut être configuré pour déplacer la première partie mobile du support en rotation autour d'au moins un premier axe de rotation. Ce déplacement contribue au balayage du faisceau optique émis depuis les déphaseurs optiques selon une première dimension, c'est-à-dire parallèlement à une première direction de balayage.

Ici et dans tout le reste du document, l'expression « direction de balayage » est utilisée pour désigner une pluralité d'axes parallèles entre eux et le long desquels l'onde optique peut être émise.

Le scanner peut être tel que :
- le support comporte une partie fixe et une poutre, la poutre comprenant une première portion et une deuxième portion, la première portion de la poutre étant solidaire de la partie fixe du support et la deuxième portion de la poutre forme la première partie mobile du support, et
- l'actionneur est configuré pour faire fléchir la deuxième portion de la poutre autour du premier axe de rotation et/ou pour déformer en torsion la deuxième portion de la poutre autour du premier axe de rotation (qui est alors parallèle à la longueur de la poutre).

Le mouvement de rotation de la première partie mobile du support en rotation autour du premier axe de rotation est donc obtenu en mettant la poutre en flexion et/ou en torsion.

En variante, le scanner peut être tel que :
- le support comporte en outre au moins deux premiers bras, la première partie mobile du support étant suspendue par les deux premiers bras qui sont alignés parallèlement au premier axe de rotation, les deux premiers bras comprenant des premières extrémités qui sont couplées à deux côtés opposés de la première partie mobile du support, et
- l'actionneur comporte deux premières parties chacune configurée pour déformer en torsion et/ou en flexion l'un des deux premiers bras.

Dans cette configuration, le mouvement de rotation de la première partie mobile du support autour du premier axe de rotation est donc obtenu en mettant les deux premiers bras en torsion et/ou en flexion.

Dans ce cas, le scanner peut être tel que :
- le support comporte en outre des deuxièmes bras et une deuxième partie mobile qui est suspendue par les deuxièmes bras qui sont alignés parallèlement à un deuxième axe de rotation perpendiculaire au premier axe de rotation, les deux premiers bras comprenant des deuxièmes extrémités opposées aux premières extrémités et qui sont couplées à la deuxième partie mobile, les deuxièmes bras comprenant des premières extrémités couplées à deux côtés opposés que comporte la deuxième partie mobile du support et des deuxièmes extrémités couplées à une partie fixe que comporte le support, et
- l'actionneur comporte deux deuxièmes parties chacune configurée pour déformer en torsion et/ou en flexion l'un des deux deuxièmes bras.

Dans cette configuration, le déplacement de la deuxième partie mobile contribue au balayage du faisceau optique émis depuis les déphaseurs optiques selon une deuxième dimension, c'est-à-dire parallèlement à une deuxième direction de balayage, perpendiculaire à la première dimension.

La première partie mobile du support peut comporter une face sur laquelle le réseau optique à commande de phase est disposé, les premiers et deuxièmes bras pouvant être alignés selon deux directions parallèles à ladite face de la première partie mobile du support.

La pluralité de déphaseurs optiques peut être alignée parallèlement ou perpendiculairement au premier axe de rotation.

Lorsque les déphaseurs optiques sont alignés parallèlement au premier axe de rotation, ils contribuent au balayage du faisceau optique émis depuis les déphaseurs optiques selon une deuxième dimension perpendiculaire à la première dimension.

Lorsque les déphaseurs optiques sont alignés perpendiculairement au premier axe de rotation, ils contribuent au balayage du faisceau optique émis depuis les déphaseurs optiques selon la première dimension.

En variante, la pluralité de déphaseurs optiques peut être agencée en formant une matrice de plusieurs lignes et plusieurs colonnes de déphaseurs optiques. Une telle matrice de déphaseurs optiques peut contribuer au balayage du faisceau selon deux dimensions qui correspondent ou non à la ou aux dimensions pour lesquelles la partie mobile du support est mise en mouvement. Une telle matrice peut également servir à remplir une fonction optique plus complexe (focalisation, diffraction, etc.). Le réseau optique à commande de phase peut être utilisé pour produire des fonctions autres que le balayage 2D d'un faisceau optique, comme par exemple pour former des éléments optiques diffractifs tels que des lentilles virtuelles dynamiques pour la focalisation ou la division de faisceau. Il peut également être utilisé pour produire des hologrammes en temps réel.

L'actionneur peut comporter des moyens d'actionnement d'au moins un des types suivants : électrostatique, magnétique, piézoélectrique, thermique. D'autres types de moyens d'actionnement sont également possibles.

L'actionneur peut comporter une ou plusieurs parties distinctes, chacune comportant une portion de matériau piézoélectrique disposée entre deux électrodes. Une telle configuration est particulièrement avantageuse car chaque partie de l'actionneur peut être intégrée directement sur la ou l'une des parties mobiles.

La pluralité de déphaseurs optiques peut comporter des réseaux de diffraction couplés à des moyens de déphasage thermiques ou piézoélectriques. Le faisceau optique est émis depuis les réseaux de diffraction.

Les déphaseurs optiques peuvent générer une onde optique par interférences constructives ou par interférences destructives.

L'invention concerne également un procédé de réalisation d'un scanner selon la revendication 12.

La réalisation du réseau optique à commande de phase peut comporter :
- dépôt d'une première couche de gaine sur le support ;
- dépôt d'une couche de coeur sur la première couche de gaine ;
- gravure de la couche de coeur, formant des réseaux de diffraction ;
- dépôt d'une deuxième couche de gaine sur les réseaux de diffraction et sur la première couche de gaine.

Une couche de gaine désigne une couche de matériau adapté pour former une gaine de guides d'onde et de réseaux de diffraction. Une couche de coeur désigne une couche de matériau adapté pour former le coeur de guides d'onde et de réseaux de diffraction.

La réalisation de l'actionneur peut comporter :
- dépôt d'une première couche électriquement conductrice sur la deuxième couche de SiO₂ ;
- dépôt ou report d'une couche de matériau piézoélectrique sur la première couche électriquement conductrice ;
- dépôt d'une deuxième couche électriquement conductrice sur la couche de matériau piézoélectrique ;
- gravures successives de la deuxième couche électriquement conductrice, de la couche de matériau piézoélectrique et de la première couche électriquement conductrice, formant au moins une portion de matériau piézoélectrique disposée entre deux électrodes.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- les figures 1 à 3 représentent des scanners, objets de la présente invention, selon plusieurs modes de réalisation ;
- les figures 4 à 15 représentent les étapes d'un procédé de réalisation d'un scanner, objet de la présente invention, selon un mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

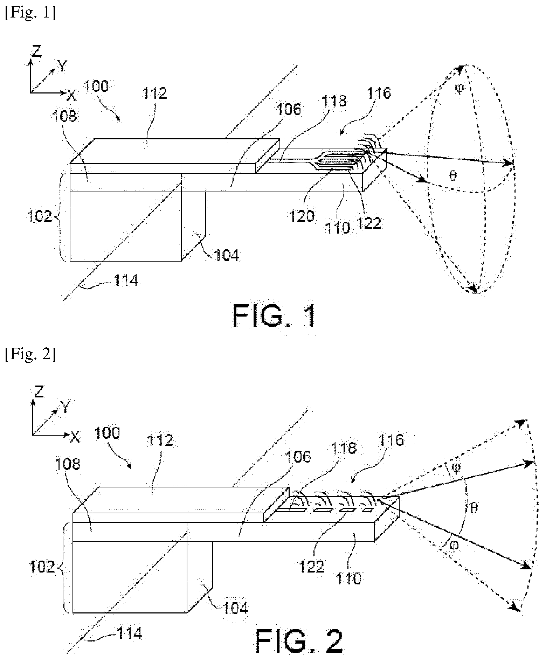

Un scanner 100 selon un premier mode de réalisation est décrit ci-dessous en lien avec la figure 1.

Le scanner 100 comporte un support 102. Le support 102 est réalisé à partir d'un substrat comprenant par exemple un semi-conducteur tel que du silicium.

Le support 102 forme une partie fixe 104, c'est-à-dire non mobile.

Dans ce premier mode de réalisation, le support 102 comporte une poutre 106 dont une première portion 108 est solidaire de la partie fixe 104 du support 102. Une deuxième portion 110 de la poutre 106 n'est pas disposée sur la partie fixe 104 et forme une partie mobile du support 102 pouvant être mise en mouvement vis-à-vis de la partie fixe 104. Sur la figure 1, les deux portions 108, 110 de la poutre 106 sont séparées symboliquement par un trait pointillé.

Le scanner 100 comporte également un actionneur 112 configuré pour déplacer la partie mobile du support 102. Cet actionneur 112 est par exemple de type électrostatique, magnétique, piézoélectrique ou bien thermique. Dans l'exemple représenté sur la figure 1, l'actionneur 112 est de type piézoélectrique, et comporte une portion de matériau piézoélectrique disposée entre deux électrodes.

L'actionneur 112 est disposé sur la poutre 106, et recouvre ici au moins partiellement la première portion 108 et une partie de la deuxième portion 110 de la poutre 106. L'actionneur 112 est ainsi configuré pour déplacer la partie mobile, formée par la deuxième portion 110 de la poutre 106, par rapport à la partie fixe du support 102. Dans ce premier mode de réalisation, ce déplacement correspond à une flexion de la deuxième portion 110 de la poutre 106 autour d'un axe de rotation 114. Ainsi, en appliquant une tension électrique non nulle sur les électrodes de l'actionneur 112, celui-ci peut déplacer la deuxième portion 110 de la poutre 106 en rotation autour de l'axe de rotation 114, par effet bilame.

Sur l'exemple représenté sur la figure 1, une plus grande dimension de la poutre 106, c'est-à-dire sa longueur (dimension parallèle à l'axe X visible sur la figure 1), est perpendiculaire à l'axe de rotation 114 (qui est parallèle à l'axe Y visible sur la figure 1). La longueur de la poutre 106 est par exemple comprise entre 1 µm et plusieurs millimètres, ou entre 1 µm et 9 mm. L'épaisseur de la poutre 106 (dimension parallèle à l'axe Z visible sur la figure 1) est par exemple comprise entre 100 nm et plusieurs dizaines de microns, ou entre 100 nm et 99 µm.

Le scanner 100 comporte également un réseau optique à commande de phase 116. Ce réseau 116 est disposé sur la partie mobile du support 102, c'est-à-dire sur la deuxième portion 110 de la poutre 106. Le réseau 116 comporte une source optique 118 couplée à plusieurs guides d'onde 120 séparant le faisceau optique principal issu de la source optique 118 en plusieurs faisceaux optiques secondaires. La source optique 118 est par exemple de type LASER et la longueur d'onde de la lumière émise par la source 118 dépend notamment de l'application visée pour le scanner 100. Par exemple, pour une application LIDAR, la longueur d'onde de la lumière émise par la source optique 118 peut être comprise entre 905 nm et 1550 nm pour des raisons de sécurité oculaire. Chaque guide d'onde 120 est couplé à au moins un déphaseur optique 122 appliquant un déphasage au faisceau optique secondaire reçu. Chaque déphaseur optique 122 comporte par exemple un réseau de diffraction couplé à des moyens de déphasage permettant d'appliquer au faisceau optique secondaire reçu par le déphaseur optique 122 un déphasage. Dans le premier mode de réalisation décrit ici, les déphaseurs optiques 122 sont alignés les uns à côté des autres sur la deuxième portion 110 de la poutre 106 et parallèlement à l'axe de rotation 114. Les moyens de déphasage (non visibles sur la figure 1) des déphaseurs optiques 122 correspondent par exemple à des actionneurs piézoélectriques ou à des moyens de chauffage.

Des détails de réalisation d'un tel réseau 116 sont par exemple décrits dans le document « Silicon optical phased array with high efficiency beam formation over 180 degree field of view » de C.T. Phare et al., Applied Physics Optics 2018.

Grâce à la flexion de la poutre 106 autour de l'axe de rotation 114 réalisée par l'actionneur 112, l'onde optique émise par le réseau 116 peut être dirigée le long d'un première direction de balayage perpendiculaire à la surface de la poutre 106 sur laquelle se trouve le réseau 116 en formant, par rapport à l'axe parallèle à la longueur de la poutre 106 au repos, c'est-à-dire non fléchie par l'actionneur 112, un angle ϕ pouvant varier par exemple entre environ -20° et +20°, voire même des valeurs plus importantes comme par exemple entre environ -90° et +90°.

De plus, le réseau optique à commande de phase 116 permet d'émettre un faisceau optique formant une onde optique le long d'une deuxième direction de balayage parallèle à l'axe de rotation 114, et donc perpendiculaire à la première direction de balayage. L'onde optique émise par le réseau 116 peut donc être dirigée selon cette deuxième direction de balayage en formant, par rapport à un axe parallèle à la longueur de la poutre 106, un angle θ pouvant varier par exemple entre environ -80° et +80°. A titre d'exemple, lorsque le réseau 116 comporte 64 déphaseurs optiques intégrant des moyens de déphasage thermiques, l'angle θ obtenu peut atteindre 160° (-80° à +80° par rapport à l'axe parallèle à la longueur de la poutre 106).

A titre d'exemple, lorsque la poutre 106 a une épaisseur égale à 2 µm, l'amplitude de l'oscillation obtenue à l'extrémité de la poutre 106 où se situe le réseau 116 peut être comprise entre 10 nm et quelques centaines de microns, ou entre 10 nm et 900 µm, en fonction de la longueur de la poutre 106.

Dans le premier mode de réalisation décrit ci-dessus, la première direction de balayage obtenue grâce au déphasage de l'onde optique émise par le réseau optique à commande de phase 116 est perpendiculaire à la deuxième direction de balayage obtenue grâce à la mise en mouvement de la partie mobile du support 102. L'onde optique émise par le scanner 100 peut donc balayer une surface dont les limites sont définies par les valeurs maximales des angles θ et ϕ.

Un scanner 100 selon un deuxième mode de réalisation est décrit ci-dessous en lien avec la figure 2.

Le scanner 100 selon ce deuxième mode de réalisation comporte un support 102 et un actionneur 112 similaires à ceux précédemment décrits pour le premier mode de réalisation.

Le scanner 100 selon ce deuxième mode de réalisation comporte le réseau optique à commande de phase 116 disposé sur la deuxième portion 110 de la poutre 106. Le réseau 116 comporte la source optique 118 qui est couplée aux déphaseurs optiques 122 qui sont alignés les uns à côté des autres sur la deuxième portion 110 de la poutre 106. Les déphaseurs optiques 122 comportent par exemple, comme dans le premier mode de réalisation, des réseaux de diffraction couplés à des moyens de déphasage piézoélectriques ou thermiques.

Contrairement au premier mode de réalisation, les déphaseurs optiques 122 sont ici alignés perpendiculairement à l'axe de rotation 114. Ainsi, le réseau optique à commande de phase 116 permet d'émettre une onde optique le long de la première direction de balayage. L'onde optique émise par le réseau 116 peut donc être dirigée le long de cette première direction de balayage en formant, par rapport à l'axe parallèle à la longueur de la poutre 106 non fléchie par l'actionneur 112, un angle θ pouvant varier par exemple entre environ -20° et +20°, voire même des valeurs plus importantes comme par exemple entre environ -90° et +90°. Cette déviation d'angle θ de l'onde optique vient se cumuler à celle d'angle ϕ apportée par la flexion de la poutre 106 autour de l'axe de rotation 114 réalisée par l'actionneur 112. Ainsi, par rapport à l'axe parallèle à la longueur de la poutre 106 non fléchie par l'actionneur 112, l'onde optique peut être émise le long de la première direction de balayage en formant les angles -(θ+ϕ)° et +(θ+ϕ)°.

Dans les deux modes de réalisation précédemment décrits, la deuxième portion 110 de la poutre 106 est mise en mouvement par flexion. En variante, il est possible que l'actionneur 112 déforme la deuxième portion 110 de la poutre 106 en torsion autour de l'axe de la poutre 106 qui est parallèle à la longueur de la poutre 106. Ce mouvement de torsion permet d'obtenir un mouvement de rotation de la deuxième portion 110 autour de l'axe de la poutre 106 et donc d'obtenir un balayage différent de ceux précédemment décrits. Cette déformation en torsion de la deuxième portion 110 de la poutre 106 peut être combinée ou non au mouvement de flexion de la deuxième portion 110 de la poutre 106.

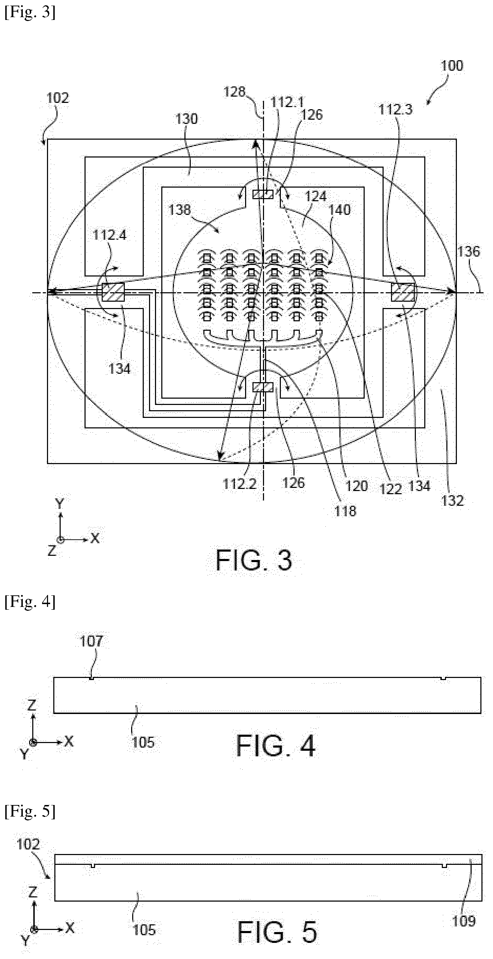

Un scanner 100 selon un troisième mode de réalisation est décrit ci-dessous en lien avec la figure 3 (qui correspond à une vue de dessus du scanner 100).

Le scanner 100 comporte un support 102 différent de celui précédemment décrit pour les premier et deuxième modes de réalisation. Le support 102 comporte ici une première partie mobile 124 suspendue par deux premiers bras 126 alignés parallèlement à un premier axe de rotation 128 de la première partie mobile 124. Sur la figure 3, le premier axe de rotation 128 est parallèle à l'axe Y. Des premières extrémités des bras 126 sont couplées à deux côtés opposés de la première partie mobile 124. Des deuxièmes extrémités des bras 126 sont couplées à une deuxième partie mobile 130 du support 102. Cette deuxième partie mobile 130 est suspendue à une partie fixe 132 du support 102 par des deuxièmes bras 134 alignés parallèlement à un deuxième axe de rotation 136 perpendiculaire au premier axe de rotation 128. Sur la figure 3, le deuxième axe de rotation 136 est parallèle à l'axe X. Des premières extrémités des deuxièmes bras 134 sont couplées à deux côtés opposés de la deuxième partie mobile 130 et des deuxièmes extrémités des deuxièmes bras 134 sont couplées à la partie fixe 132.

Les premiers bras 126 et les deuxièmes bras 134 sont alignés selon deux directions (axes X et Y) parallèles à une face 138 de la première partie mobile 124 sur laquelle un réseau optique à commande de phase 140 est disposé. Le réseau 140 comporte la source optique 118 couplée aux guides d'onde 120 séparant le faisceau optique principal issu de la source optique 118 en plusieurs faisceaux optiques secondaires. Chaque guide d'onde 120 est couplé à plusieurs déphaseurs optiques 122, par exemple similaires à ceux précédemment décrits pour les premier et deuxième modes de réalisation. Dans le troisième mode de réalisation décrit ici, les déphaseurs optiques 122 sont agencés en formant une matrice de plusieurs lignes et plusieurs colonnes de déphaseurs optiques 122.

Dans ce troisième mode de réalisation, l'actionneur 112 comporte plusieurs parties distinctes, référencées 112.1, 112.2, 112.3 et 112.4 sur la figure 3, chacune disposée sur l'un des premiers et deuxièmes bras 126, 134. Chacune de ces parties 112.1 - 112.4 comporte par exemple une portion de matériau piézoélectrique disposée entre deux électrodes et permet de déformer en torsion le bras sur lequel cette partie de l'actionneur 112 est disposée. Ainsi, les parties 112.1 et 112.2 de l'actionneur 112 permettent de déplacer en rotation autour du premier axe de rotation 128 la première partie mobile 124 grâce à la mise en torsion des premiers bras 126, et les parties 112.3 et 112.4 de l'actionneur 112 permettent de déplacer en rotation autour du deuxième axe de rotation 136 la deuxième partie mobile 130, et donc également la première partie mobile 124, grâce à la mise en torsion des deuxièmes bras 134.

La mise en rotation de la partie mobile 124 autour du premier axe de rotation 128 permet d'orienter le faisceau optique émis par le réseau 140 le long d'une première direction de balayage parallèle au deuxième axe de rotation 136. La mise en rotation des parties mobiles 124 et 130 autour du deuxième axe de rotation 136 permet d'orienter le faisceau optique émis par le réseau 140 le long d'une deuxième direction de balayage parallèle au premier axe de rotation 128.

A titre d'exemple, lorsque la première partie mobile 124 a une forme sensiblement circulaire, le rayon de la première partie mobile 124 est par exemple compris entre environ 250 µm et 1 mm, et sa fréquence de résonance peut être comprise entre environ 1 kHz et 15 kHz en fonction de la forme et des dimensions des premiers bras 126. Par exemple, une première partie mobile 124 de rayon égal à 500 µm actionnée à une fréquence de résonance de 8,707 kHz en appliquant une tension égale à 1 V_{RMS} sur chaque partie de l'actionneur 112 permet d'obtenir, au niveau des bords de la première partie mobile 124, un déplacement d'amplitude égale à 4,7 µm par rapport à la position de la première partie mobile 124 au repos.

Selon un premier exemple de ce troisième mode de réalisation, le réseau optique à commande de phase 140 peut servir à augmenter la surface balayée par le faisceau optique émis par le réseau 140. En effet, les déviations d'angle du faisceau optique obtenues grâce aux déplacements de la première partie mobile 124 autour des axes de rotation 128 et 136 se cumulent dans ce cas avec les déviations d'angles du faisceau optique obtenues par les déphasages engendrés par le réseau 140.

Selon un deuxième exemple de ce troisième mode de réalisation, le réseau 140 peut servir à remplir une fonction différente telle qu'une focalisation suivant une dimension perpendiculaire la surface 138 sur laquelle le réseau 140 est disposé (dimension parallèle à l'axe Z sur la figure 3). Ainsi, il est possible de focaliser le faisceau optique émis par le réseau 140 à une distance variable de la surface 138. Le réseau 140 peut être utilisé pour former des éléments optiques diffractifs tels que des lentilles virtuelles dynamiques pour la focalisation ou la division de faisceau. Il peut également être utilisé pour produire des hologrammes.

En variante de ce troisième mode de réalisation, il est possible que le support 102 comporte, comme dans l'exemple précédemment décrit, la première partie mobile 124 suspendue par les deux premiers bras 126, mais que les deuxièmes extrémités des bras 126 soient couplées directement à la partie fixe 132. Dans ce cas, le support 102 ne comporte pas la deuxième partie mobile 130 ni les deuxièmes bras 134. Le réseau 140 peut permettre de réaliser des déviations d'angles autour de l'axe 136, c'est-à-dire déplacer le faisceau optique le long de la deuxième direction de balayage, même en l'absence de la deuxième partie mobile 130 et des deuxièmes bras 134, grâce aux déphasages du réseau 140. L'amplitude de déplacement du faisceau optique le long de la deuxième direction de balayage sera toutefois moindre que dans l'exemple précédemment décrit puisque dans cette variante, le déplacement de la partie mobile du support 102 ne contribue au déplacement du faisceau optique le long de la deuxième direction de balayage.

De manière générale, pour tous les modes de réalisation, l'actionneur 112 peut être de type électrostatique (ou capacitif), magnétique, piézoélectrique ou bien thermique.

De nombreuses variantes de réalisation du scanner 100 peuvent être envisagées.

Selon une variante, il est par exemple possible que le scanner 100 précédemment décrit selon le premier ou le deuxième mode de réalisation comporte un réseau optique à commande de phase similaire au réseau 140 précédemment décrit pour le troisième mode de réalisation, c'est-à-dire comportant une matrice de plusieurs lignes et plusieurs colonnes de déphaseurs optiques 122. Dans ce cas, le réseau 140 peut contribuer à augmenter l'angle de la déviation apportée par le mouvement de la poutre 108 le long de la première direction de balayage, et à dévier le faisceau optique émis selon une autre direction de balayage perpendiculaire à la première direction de balayage. En alternative, le réseau 140 peut servir à dévier le faisceau optique émis selon deux directions perpendiculaires à celle selon laquelle la poutre 108 apporte une déviation, l'une de ces deux directions servant par exemple à réaliser une focalisation du faisceau optique émis le long d'un axe perpendiculaire à la surface sur laquelle se trouve le réseau 140.

Selon une autre variante, il est par exemple possible que le scanner 100 précédemment décrit selon le troisième mode de réalisation comporte un réseau optique à commande de phase similaire au réseau 116 précédemment décrit pour l'un des premier et deuxième modes de réalisation.

Pour tous les modes de réalisation, le support 102 (partie fixe + partie mobile) peut également être mis en mouvement afin d'augmenter les possibilités de direction vers lesquelles le faisceau optique est envoyé.

Dans les différents modes de réalisation et exemples précédemment décrits, la partie mobile du support est mise en mouvement en rotation autour d'un ou plusieurs axes de rotation. De manière générale, il est possible que la partie mobile du support soit mise en mouvement par un mouvement de rotation et/ou de flexion et/ou de translation.

Un exemple de procédé de réalisation du scanner 100, selon l'un des modes de réalisation précédemment décrits, est détaillé ci-dessous en lien avec les figures 4 à 15.

Le scanner 100 est réalisé à partir d'un substrat 105, comprenant par exemple du silicium. Sur la figure 4, le substrat 105 comporte des marques d'alignement 107. Le substrat 105 forme ici le support 102.

Le réseau optique à commande de phase 116 ou 140 est tout d'abord réalisé sur le substrat 105. Dans l'exemple décrit ici, le réseau réalisé correspond au réseau 116 précédemment décrit en lien avec les premier et deuxième modes de réalisation.

Pour cela, une première couche de gaine 109 est réalisée, ou déposée, sur le substrat 105. La couche 109 comporte par exemple du SiO₂, obtenu par exemple par oxydation du silicium du substrat 105 (voir figure 5). Le matériau diélectrique de la couche 109 est adapté pour former un matériau de gaine d'un guide d'onde, et correspond par exemple à du SiO₂ ou un matériau polymère. La couche 109 a par exemple une épaisseur comprise entre environ 500 nm et 3 µm.

Une couche 111 de coeur de guide d'onde est ensuite déposée sur la couche 109. L'indice optique, ou indice de réfraction, du matériau de la couche 111 est différent de celui de la couche 109. Dans l'exemple de réalisation décrit ici, le matériau de la couche 111 est du SiN. D'autres matériaux peuvent être utilisés pour réaliser la couche 111, comme par exemple du silicium polycristallin. L'épaisseur de la couche 111 est par exemple comprise entre environ 100 nm et 1 µm.

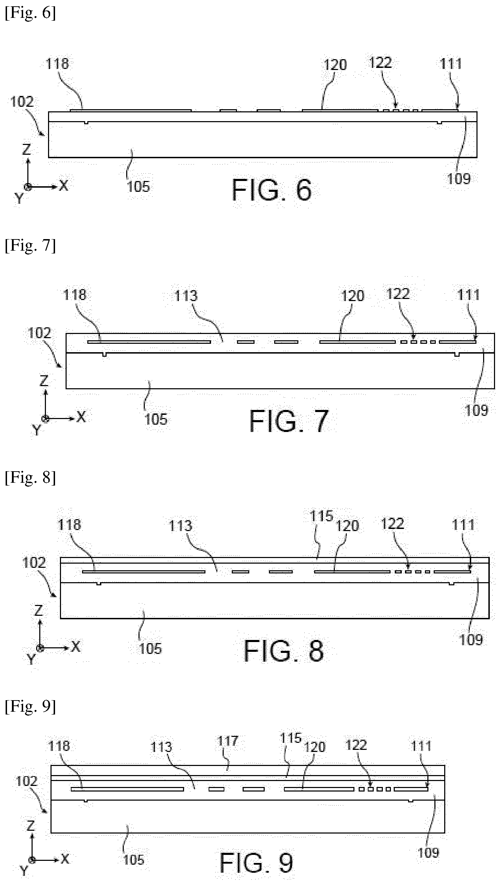

La couche 111 est ensuite gravée, ou structurée, afin de former notamment les réseaux de diffraction des déphaseurs optiques 122 ainsi que le ou les guides d'onde 120 servant à acheminer le ou les faisceaux optiques depuis la source lumineuse 118 vers les déphaseurs optiques 122 (voir figure 6).

Une deuxième couche de gaine 113 est ensuite réalisée pour recouvrir la couche 111 gravée (voir figure 7). Le matériau de la couche 113 est choisi tel que l'indice optique du matériau de la couche 113 est différent de celui de la couche 111 et est par exemple similaire à celui de la couche 109. Le matériau diélectrique de la couche 113 est adapté pour former un matériau de gaine d'un guide d'onde, et correspond par exemple à du SiO₂. L'épaisseur de la couche 113 est par exemple comprise entre environ 500 nm et 3 µm.

L'actionneur 112 est ensuite réalisé. Dans le procédé de réalisation décrit ici, l'actionneur 112 est de type piézoélectrique.

Une première couche électriquement conductrice 115 est déposée sur la couche 113 (voir figure 8). Cette première couche électriquement conductrice 115 est destinée à former l'une des électrodes de l'actionneur 112, ou l'une des électrodes de chacune des différentes parties de l'actionneur 112 (comme c'est le cas pour le troisième mode de réalisation précédemment décrit). La couche 115 comporte par exemple du platine ou du molybdène, la nature de ce matériau étant choisie en fonction du matériau piézoélectrique qui sera utilisé. L'épaisseur de la couche 115 est par exemple comprise entre environ 100 nm et 200 nm.

Une couche de matériau piézoélectrique 117 est ensuite déposée sur la couche 115 (voir figure 9). Cette couche 117 comporte par exemple du PZT, de l'AIN, du ZnO ou du BST (Ba₁₋ₓSrₓTiO₃). L'épaisseur de la couche 117 est par exemple comprise entre environ 500 nm et 2 µm.

Une deuxième couche électriquement conductrice 119 est ensuite déposée sur la couche 117. Cette deuxième couche électriquement conductrice 119 est destinée à former l'autre électrode de l'actionneur 112 ou de chacune des parties de l'actionneur 112. La couche 119 comporte par exemple du platine ou du Mo ou du Ru. L'épaisseur de la couche 119 est par exemple comprise entre environ 100 nm et 200 nm.

Cette couche 119 est ensuite gravée, par gravure sèche ou humide, afin que la ou les portions restantes de cette couche 119 forme(nt) l'électrode supérieure de l'actionneur 112 ou de chacune des parties de l'actionneur 112.

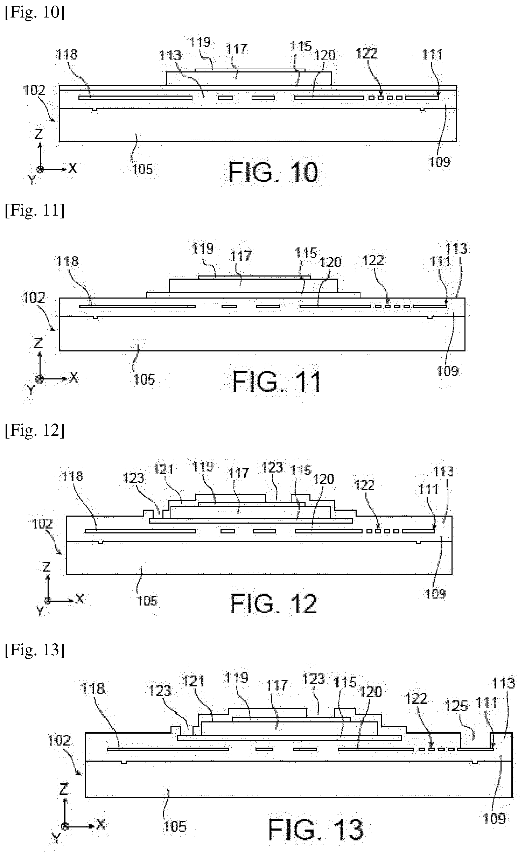

La couche 117 est également gravée par gravure sèche (par exemple une gravure plasma) afin que la ou les portions restantes de cette couche 117 forme(nt) la portion de matériau piézoélectrique de l'actionneur 112 ou de chacune des parties de l'actionneur 112 (voir figure 10). La couche 117 est gravée telle que la ou les parties de la couche 115 destinées à former la ou les électrodes inférieures de l'actionneur 112 ne soient pas complètement recouvertes par la ou les portions restantes de la couche 117, afin d'avoir des parties de la couche 115 accessibles électriquement.

La couche 115 est ensuite gravée par gravure sèche (par exemple une gravure plasma) afin que la ou les portions restantes de cette couche 115 forme(nt) l'électrode inférieure de l'actionneur 112 ou de chacune des parties de l'actionneur 112 (voir figure 11). La couche 115 est gravée telle qu'une ou plusieurs parties de la couche 115 ne soient pas recouvertes par la ou les portions restantes de la couche 117, afin d'avoir des parties de la couche 115 accessibles électriquement.

Lorsque les déphaseurs optiques 122 comportent des moyens de déphasage piézoélectriques, les étapes précédemment décrites pour réaliser l'actionneur 112 peuvent servir également à réaliser ces moyens de déphasage piézoélectriques qui peuvent correspondre à des actionneurs piézoélectriques, couplés les uns aux autres ou indépendants les uns des autres, et comprenant, comme l'actionneur 112, une portion de matériau piézoélectrique disposée entre deux électrodes. Les déformations mécaniques engendrées en actionnant ces actionneurs piézoélectriques permettent dans ce cas de déphaser l'onde optique émise par les déphaseurs optiques 122.

En variante, lorsque les déphaseurs optiques 122 comportent des moyens de déphasage thermiques, des éléments chauffants peuvent être intégrés entre les guides d'onde 120 et l'actionneur 122, ces éléments chauffants assurant dans ce cas le déphasage de l'onde optique émise par les déphaseurs optiques 122 en chauffant le matériau de la couche 111 à la température souhaitée, en fonction du déphasage requis.

Une couche de passivation 121 est ensuite déposée en recouvrant la couche 113 ainsi que l'actionneur 112. La couche 121 comporte par exemple un oxyde tel que du SiO₂, du SiN ou du Si₃N₄.

Des premières ouvertures 123 sont ensuite gravées à travers la couche 121 afin de former des accès aux électrodes supérieures et inférieures de l'actionneur 112 (voir figure 12).

Une ou plusieurs deuxièmes ouvertures 125 sont ensuite gravées à travers la couche 121, en regard des déphaseurs optiques 122, pour permettre l'extraction de la lumière depuis les déphaseurs optiques 122 (voir figure 13).

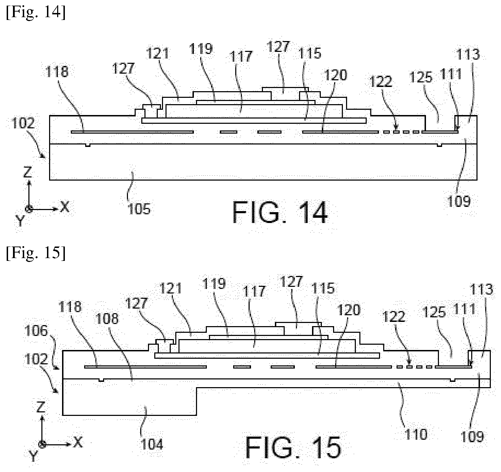

Des plots électriquement conducteurs 127 sont ensuite réalisés, par exemple par dépôt d'un matériau électriquement conducteur puis par gravure de ce matériau, dans les premières ouvertures 123. Ces plots 127 sont reliés électriquement aux électrodes de l'actionneur 112 et permettent l'envoi de signaux de commande à l'actionneur 112 (voir figure 14).

Le substrat 105 est ensuite gravé depuis sa face arrière afin de former la ou les parties mobiles du scanner 100 (voir figure 15). Dans l'exemple décrit ici, cette gravure du substrat 105 permet de former la poutre 106 qui comporte la première portion 108 et la deuxième portion 110.

Des plots électriquement conducteurs 127 sont ensuite réalisés, par exemple par dépôt d'un matériau électriquement conducteur puis par gravure de ce matériau, dans les premières ouvertures 123. Ces plots 127 sont reliés électriquement aux électrodes de l'actionneur 112 et permettent l'envoi de signaux de commande à l'actionneur 112 (voir figure 14).

Le substrat 105 est ensuite gravé depuis sa face arrière afin de former la ou les parties mobiles du scanner 100 (voir figure 15). Dans l'exemple décrit ici, cette gravure du substrat 105 permet de former la poutre 106 qui comporte la première portion 108 et la deuxième portion 110.

## Revendications

1. Scanner (100) comportant au moins :
- un support (102) comprenant au moins une première partie mobile (110, 124),
- un actionneur (112) configuré pour déplacer la première partie mobile (110, 124) du support (102), et
- un réseau optique à commande de phase (116, 140) disposé sur la première partie mobile (110, 124) du support (102) et comprenant au moins une pluralité de déphaseurs optiques (122) et une source optique (118) couplée à la pluralité de déphaseurs optiques (122) qui est apte à émettre un faisceau optique issu de la source optique (118), les déphaseurs optiques (122) étant configurés pour générer une onde optique par interférences constructives ou par interférences destructives.

2. Scanner (100) selon la revendication 1, dans lequel l'actionneur (112) est configuré pour déplacer la première partie mobile (110, 124) du support (102) en rotation autour d'au moins un premier axe de rotation (114, 128).

3. Scanner (100) selon la revendication 2, dans lequel :
- le support (102) comporte une partie fixe (104) et une poutre (106), la poutre (106) comprenant une première portion (108) et une deuxième portion (110), la première portion (108) de la poutre (106) étant solidaire de la partie fixe (104) du support (102) et la deuxième portion (110) de la poutre (106) forme la première partie mobile du support (102), et
- l'actionneur (112) est configuré pour faire fléchir la deuxième portion (110) de la poutre (106) autour du premier axe de rotation (114) et/ou pour déformer en torsion la deuxième portion (110) de la poutre (106) autour du premier axe de rotation.

4. Scanner (100) selon la revendication 2, dans lequel :
- le support (102) comporte en outre au moins deux premiers bras (126), la première partie mobile (124) du support (102) étant suspendue par les deux premiers bras (126) qui sont alignés parallèlement au premier axe de rotation (128), les deux premiers bras (126) comprenant des premières extrémités qui sont couplées à deux côtés opposés de la première partie mobile (124) du support (102), et
- l'actionneur (112) comporte deux premières parties (112.1, 112.2) chacune configurée pour déformer en torsion et/ou en flexion l'un des deux premiers bras (126).

5. Scanner (100) selon la revendication 4, dans lequel :
- le support (102) comporte en outre des deuxièmes bras (134) et une deuxième partie mobile (130) qui est suspendue par les deuxièmes bras (134) qui sont alignés parallèlement à un deuxième axe de rotation (136) perpendiculaire au premier axe de rotation (128), les deux premiers bras (126) comprenant des deuxièmes extrémités opposées aux premières extrémités et qui sont couplées à la deuxième partie mobile (130), les deuxièmes bras (134) comprenant des premières extrémités couplées à deux côtés opposés que comporte la deuxième partie mobile (130) du support (102) et des deuxièmes extrémités couplées à une partie fixe (132) que comporte le support (102), et
- l'actionneur (112) comporte deux deuxièmes parties (112.3, 112.4) chacune configurée pour déformer en torsion et/ou en flexion l'un des deux deuxièmes bras (134).

6. Scanner (100) selon la revendication 5, dans lequel la première partie mobile (124) du support (102) comporte une face (138) sur laquelle le réseau optique à commande de phase (140) est disposé, les premiers et deuxièmes bras (126, 134) étant alignés selon deux directions parallèles à ladite face (138) de la première partie mobile (124) du support (102).

7. Scanner (100) selon l'une des revendications 2 à 6, dans lequel la pluralité de déphaseurs optiques (122) est alignée parallèlement ou perpendiculairement au premier axe de rotation (114).

8. Scanner (100) selon l'une des revendications 2 à 6, dans lequel la pluralité de déphaseurs optiques (122) est agencée en formant une matrice de plusieurs lignes et plusieurs colonnes de déphaseurs optiques (122).

9. Scanner (100) selon l'une des revendications précédentes, dans lequel l'actionneur (112) comporte des moyens d'actionnement d'au moins un des types suivants : électrostatique, magnétique, piézoélectrique, thermique.

10. Scanner (100) selon l'une des revendications précédentes, dans lequel l'actionneur (112) comporte une ou plusieurs parties distinctes (112.1 - 112.4), chacune comportant une portion de matériau piézoélectrique (117) disposée entre deux électrodes (115, 119).

11. Scanner (100) selon l'une des revendications précédentes, dans lequel la pluralité de déphaseurs optiques (122) comporte des réseaux de diffraction couplés à des moyens de déphasage thermiques ou piézoélectriques.

12. Procédé de réalisation d'un scanner (100), comportant au moins les étapes de :
- réalisation, sur une première partie (110, 124) d'un support (102), d'un réseau optique à commande de phase (116, 140) comprenant au moins une pluralité de déphaseurs optiques (122) et une source optique (118) couplée à la pluralité de déphaseurs optiques (122) qui est apte à émettre un faisceau optique issu de la source optique (118), les déphaseurs optiques (122) étant configurés pour générer une onde optique par interférences constructives ou par interférences destructives ;
- réalisation d'un actionneur (112) configuré pour déplacer la première partie (110, 124) du support (102) ;
- gravure du support (102) tel que la première partie (110, 124) du support (102) soit mobile.

13. Procédé selon la revendication 12, dans lequel la réalisation du réseau optique à commande de phase (116, 140) comporte :
- dépôt d'une première couche de gaine (109) sur le support (102) ;
- dépôt d'une couche de coeur (111) sur la première couche de gaine (109) ;
- gravure de la couche de coeur (111), formant des réseaux de diffraction ;
- dépôt d'une deuxième couche de gaine (113) sur les réseaux de diffraction et sur la première couche de gaine (109).

14. Procédé selon la revendication 13, dans lequel la réalisation de l'actionneur (112) comporte :
- dépôt d'une première couche électriquement conductrice (115) sur la deuxième couche de gaine (113) ;
- dépôt ou report d'une couche de matériau piézoélectrique (117) sur la première couche électriquement conductrice (115) ;
- dépôt d'une deuxième couche électriquement conductrice (119) sur la couche de matériau piézoélectrique (117) ;
- gravures successives de la deuxième couche électriquement conductrice (119), de la couche de matériau piézoélectrique (117) et de la première couche électriquement conductrice (115), formant au moins une portion de matériau piézoélectrique disposée entre deux électrodes.

## Patentansprüche

1. Scanner (100), der mindestens Folgendes umfasst:
- einen Träger (102), der mindestens einen ersten beweglichen Teil (110, 124) enthält,
- einen Aktuator (112), der dazu konfiguriert ist, den ersten beweglichen Teil (110, 124) des Trägers (102) zu bewegen, und
- ein phasengesteuertes optisches Gitter (116, 140), das auf dem ersten beweglichen Teil (110, 124) des Trägers (102) angeordnet ist und mindestens eine Vielzahl von optischen Phasenschiebern (122) und eine mit der Vielzahl von optischen Phasenschiebern (122) gekoppelte optische Quelle (118) umfasst, die dazu ausgelegt ist, einen von der optischen Quelle (118) ausgegebenen optischen Strahl zu emittieren, wobei die optischen Phasenschieber (122) dazu konfiguriert sind, eine optische Welle durch konstruktive Interferenz oder durch destruktive Interferenz zu erzeugen.

2. Scanner (100) nach Anspruch 1, wobei der Aktuator (112) dazu konfiguriert ist, den ersten beweglichen Teil (110, 124) des Trägers (102) um mindestens eine erste Drehachse (114, 128) drehbar zu bewegen.

3. Scanner (100) nach Anspruch 2, wobei:
- der Träger (102) einen festen Teil (104) und einen Stützbalken (106) enthält, wobei der Stützbalken (106) einen ersten Abschnitt (108) und einen zweiten Abschnitt (110) umfasst, wobei der erste Abschnitt (108) des Stützbalkens (106) fest mit dem festen Teil (104) des Trägers (102) verbunden ist und der zweite Abschnitt (110) des Stützbalkens (106) den ersten beweglichen Teil des Trägers (102) bildet, und
- der Aktuator (112) dazu konfiguriert ist, den zweiten Abschnitt (110) des Stützbalkens (106) um die erste Drehachse (114) herum zu biegen und/oder den zweiten Abschnitt (110) des Stützbalkens (106) um die erste Drehachse herum verdreht zu verformen.

4. Scanner (100) nach Anspruch 2, wobei:
- der Träger (102) ferner mindestens zwei erste Arme (126) enthält, wobei der erste bewegliche Teil (124) des Trägers (102) an den beiden ersten Armen (126) aufgehängt ist, die parallel zu der ersten Drehachse (128) ausgerichtet sind, wobei die beiden ersten Arme (126) erste Enden umfassen, die mit zwei gegenüberliegenden Seiten des ersten beweglichen Teils (124) des Trägers (102) gekoppelt sind, und
- der Aktuator (112) zwei erste Teile (112.1, 112.2) enthält, von denen jedes dazu konfiguriert ist, einen der beiden ersten Arme (126) verdreht und/oder gebogen zu verformen.

5. Scanner (100) nach Anspruch 4, wobei:
- der Träger (102) ferner zweite Arme (134) und einen zweiten beweglichen Teil (130) enthält, der an den zweiten Armen (134) aufgehängt ist, die parallel zu einer zweiten Drehachse (136), die senkrecht zu der ersten Drehachse (128) verläuft, ausgerichtet sind, wobei die beiden ersten Arme (126) zweite Enden umfassen, die den ersten Enden gegenüberliegen und die mit dem zweiten beweglichen Teil (130) gekoppelt sind, wobei die zweiten Arme (134) erste Enden, die mit zwei gegenüberliegenden Seiten gekoppelt sind, die den zweiten beweglichen Teil (130) des Trägers (102) enthalten, und zweite Enden umfassen, die mit einem festen Teil (132) gekoppelt sind, der den Träger (102) enthält, und
- der Aktuator (112) zwei zweite Teile (112.3, 112.4) enthält, von denen jedes dazu konfiguriert ist, einen der beiden zweiten Arme (134) verdreht und/oder gebogen zu verformen.

6. Scanner (100) nach Anspruch 5, wobei der erste bewegliche Teil (124) des Trägers (102) eine Fläche (138) enthält, auf der das phasengesteuerte optische Gitter (140) angeordnet ist, wobei die ersten und zweiten Arme (126, 134) in zwei Richtungen ausgerichtet sind, die parallel zur Fläche (138) des ersten beweglichen Teils (124) des Trägers (102) verläuft.

7. Scanner (100) nach einem der Ansprüche 2 bis 6, wobei die Vielzahl von optischen Phasenschiebern (122) parallel oder senkrecht zu der ersten Drehachse (114) ausgerichtet ist.

8. Scanner (100) nach einem der Ansprüche 2 bis 6, wobei die Vielzahl von optischen Phasenschiebern (122) derart angeordnet ist, dass eine Matrix aus mehreren Zeilen und mehreren Spalten von optischen Phasenschiebern (122) gebildet wird.

9. Scanner (100) nach einem der vorhergehenden Ansprüche, wobei der Aktuator (112) Mittel zum Betätigen von mindestens einem der folgenden Typen enthält: elektrostatisch, magnetisch, piezoelektrisch, thermisch.

10. Scanner (100) nach einem der vorhergehenden Ansprüche, wobei der Aktuator (112) ein oder mehrere separate Teile (112.1 - 112.4) enthält, von denen jedes einen Abschnitt aus piezoelektrischem Material (117) enthält, der zwischen zwei Elektroden (115, 119) angeordnet ist.

11. Scanner (100) nach einem der vorhergehenden Ansprüche, wobei die Vielzahl von optischen Phasenschiebern (122) Beugungsgitter enthält, die mit thermischen oder piezoelektrischen Phasenverschiebungsmitteln gekoppelt sind.

12. Verfahren zum Herstellen eines Scanners (100), das mindestens die folgenden Schritte enthält:
- Herstellen eines phasengesteuerten optischen Gitters (116, 140) auf einem ersten Teil (110, 124) eines Trägers (102), das mindestens eine Vielzahl von optischen Phasenschiebern (122) und eine mit der Vielzahl von optischen Phasenschiebern (122) gekoppelte optische Quelle (118) umfasst, die dazu ausgelegt ist, einen von der optischen Quelle (118) ausgegebenen optischen Strahl zu emittieren, wobei die optischen Phasenschieber (122) dazu konfiguriert sind, eine optische Welle durch konstruktive Interferenz oder durch destruktive Interferenz zu erzeugen;
- Herstellen eines Aktuators (112), der dazu konfiguriert ist, den ersten Teil (110, 124) des Trägers (102) zu bewegen;
- Ätzen des Trägers (102), so dass der erste Teil (110, 124) des Trägers (102) beweglich ist.

13. Verfahren nach Anspruch 12, wobei das Herstellen des phasengesteuerten optischen Gitters (116, 140) Folgendes enthält:
- Abscheiden einer ersten Mantelschicht (109) auf dem Träger (102);
- Abscheiden einer Kernschicht (111) auf der ersten Mantelschicht (109);
- Ätzen der Kernschicht (111), wodurch Beugungsgitter gebildet werden;
- Abscheiden einer zweiten Mantelschicht (113) auf den Beugungsgittern und auf der ersten Mantelschicht (109).

14. Verfahren nach Anspruch 13, wobei das Herstellen des Aktuators (112) Folgendes enthält:
- Abscheiden einer ersten elektrisch leitenden Schicht (115) auf der zweiten Mantelschicht (113);
- Abscheiden oder Übertragen einer Schicht aus piezoelektrischem Material (117) auf die erste elektrisch leitende Schicht (115);
- Abscheiden einer zweiten elektrisch leitenden Schicht (119) auf der Schicht aus piezoelektrischem Material (117);
- aufeinanderfolgendes Ätzen der zweiten elektrisch leitenden Schicht (119), der Schicht aus piezoelektrischem Material (117) und der ersten elektrisch leitenden Schicht (115), wodurch mindestens ein Abschnitt aus piezoelektrischem Material gebildet wird, der zwischen zwei Elektroden angeordnet ist.

## Claims

1. A scanner (100) including at least:
- a support (102) including at least one first movable part (110, 124),
- an actuator (112) configured to move the first movable part (110, 124) of the support (102), and
- a phased optical grating (116, 140) disposed on the first movable part (110, 124) of the support (102) and including at least one plurality of optical phase shifters (122) and an optical source (118) coupled to the plurality of optical phase shifters (122) which is able to emit an optical beam (106) coming from the optical source (118), the optical phase shifters (122) being configured to emit an optical beam (106) by constructive interferences or destructive interferences.

2. The scanner (100) according to claim 1, wherein the actuator (112) is configured to move the first movable part (110, 124) of the support (102) in rotation about at least one first axis of rotation (114, 128).

3. The scanner (100) according to claim 2, wherein:
- the support (102) includes a fixed part (104) and a beam (106), the beam (106) comprising a first portion (108) and a second portion (110), the first portion (108) of the beam (106) being integral with the fixed part (104) of the support (102) and the second portion (110) of the beam (106) forms the first movable part of the support (102), and
- the actuator (112) is configured to bend the second portion (110) of the beam (106) around the first axis of rotation (114, 128) and/or to deform in twisting the second portion (110) of the beam (106) around the first axis of rotation.

4. The scanner (100) according to claim 2, wherein:
- the support (102) further includes at least two first arms (126), the first movable part (124) of the support (102) being suspended by the two first arms which are aligned parallel to said the first axis of rotation (128), the two first arms (126) comprising first ends that are coupled to two opposite sides of the first movable part (124) of the support (102), and
- the actuator (112) includes two first part (110, 124)s (112.1, 112.2) each one configured to deform in twisting and/or in bending one of the two first arms (126).

5. The scanner (100) according to claim 4, wherein:
- the support (102) further includes second arms (134) and a second movable part (130) (130) which is suspended by the second arms (134) which are aligned parallel to a second axis of rotation (136) perpendicular to the first axis of rotation (128), the two first arms (126) comprising second ends opposite the first ends and which are coupled to the second movable part (130), the second arms(134) comprising first ends coupled to two opposite sides that the second movable part (130) of the support (102) includes and second ends coupled to a fixed part (132) that includes the support (102), and
- the actuator (112) includes two second parts (112.3, 112.4) each one configured to deform in twisting and/or in bending of one of the two second arms (134).

6. The scanner (100) according to claim 5, wherein the first movable part (24) of the support (102) includes a face (138) whereon the phased optical grating (140) is disposed, the first and second arms (126, 134) being aligned in two directions parallel to said face (138) of the first movable part (124) of the support (102).

7. The scanner (100) according to one of the claims 2 to 6, wherein said at least one plurality of optical phase shifters (122) is aligned in parallel or perpendicularly to the first axis of rotation (114).

8. The scanner (100) according to one of the claims 2 to 6, wherein said at least one plurality of optical phase shifters (122) is arranged by forming an array of several lines and columns of optical phase shifters (122).

9. The scanner (100) according to any of the previous claims, wherein the actuator (112) includes means for actuating at least one of the following types: electrostatic, magnetic, piezoelectric, thermal.

10. The scanner (100) according to any of the previous claims, wherein the actuator (112) includes one or more separate parts (112.1 - 112.4), each one including a portion of piezoelectric material (117) disposed between two electrodes (115, 119).

11. The scanner (100) according to any of the previous claims, wherein the plurality of optical phase shifters (122) includes diffraction gratings coupled to thermal or piezoelectric means of phase shifting.

12. A method for producing a scanner (100), including at least the steps of:
- producing, on a first part (110, 124) of a support (102), a phased optical grating (116, 140) including at least one plurality of optical phase shifters (122) and an optical source (118) coupled to the plurality of optical phase shifters (122) which is able to emit an optical beam coming from the optical source (118), the optical phase shifters (122) being configured to emit an optical beam by constructive interferences or destructive interferences;
- producing an actuator (112) configured to move the first part (110, 124) of the support (102);
- etching the support (102) such that the first part (110, 124) of the support (102) is movable.

13. The method according to claim 12, wherein producing the phased optical grating (116, 140) includes:
- depositing a first cladding layer (109) on the support (102);
- depositing a core layer (111) on the first cladding layer (109);
- etching the core layer (111), forming diffraction gratings;
- depositing a second cladding layer (113) on the diffraction gratings and on the first cladding layer (109).

14. The method according to claim 13, wherein producing the actuator (112) includes:
- depositing a first electrically conductive layer (115) on the second cladding layer (113);
- depositing or transferring a layer of piezoelectric material (117) on the first electrically conductive layer (115);
- depositing a second electrically conductive layer (119) on the layer of piezoelectric material (117);
- etching successively the second electrically conductive layer (119), the layer of piezoelectric material (117) and the first electrically conductive layer (115), forming at least one portion of piezoelectric material disposed between two electrodes.
